# EUROPEAN PATENT SPECIFICATION

(11) **EP 1 911 570 B1**
(45) Date of publication and mention of the grant of the patent: **20.05.2009**
(21) Application number: 08001480.6
(22) Date of filing: 22.11.2005
(51) Int. Cl.: B29C 70/76, B28B 11/00, B01D 46/24

(54) **Plugging method and apparatus for particulate filters**
Verschlussverfahren und Vorrichtung für Teilchenfilter
Procédé et appareil de bouchage pour filtres à particules

(30) Priority: 21.12.2004 US 638275 P
(43) Date of publication of application: 16.04.2008
(62) Divisional of application: 05852150.1
(73) Proprietor: Corning Incorporated, Corning NY 14831 (US)
(72) Inventor: Mudd, James R., Lindley, New York 14858 (US); Powell, Robert A., Horseheads, New York 14845 (US); Ryszytiwskyj, William P., Corning, New York 14830 (US); Schoonmaker, Jason E., Painted Post, New York 14870 (US); Weachock, Richard H., Horseheads, New York 14845 (US)
(74) Representative: Sturm, Christoph

(56) References cited:
- US-A- 4 557 682
- US-A- 4 557 773
- US-A- 4 573 896
- US-A- 4 715 576

## Description

### Related Applications

This application claims priority to, and the benefit of, US Provisional Patent Application No. 60/638,275 entitled "Flat Patty Plugging of Particulate Filters" filed December 21, 2004.

### Field of the Invention

This invention relates to the charging of flowable materials into selected cells of a honeycomb structure, and, more particularly, to a method according to claim 1 and an apparatus according to claim 11 for selectively manifolding, i.e., plugging, cells of a honeycomb structure for the fabrication of ceramic filter bodies and other selectively sealed honeycomb structures.

### Background of the Invention

Honeycomb structures having traverse cross-sectional cellular densities of approximately ten to one hundred cells or more per square centimeter have several uses, including solid particulate filter bodies and stationary heat exchangers. Wall flow particulate filter applications require selected cells of the structure to be sealed or plugged by manifolding and the like at one or both of the respective ends thereof. The term "sealed" and other corresponding grammatical forms, i.e., sealant, sealing, etc., are used herein to refer to porous and non-porous methods of closing the open traverse cross-sectional areas of the cells.

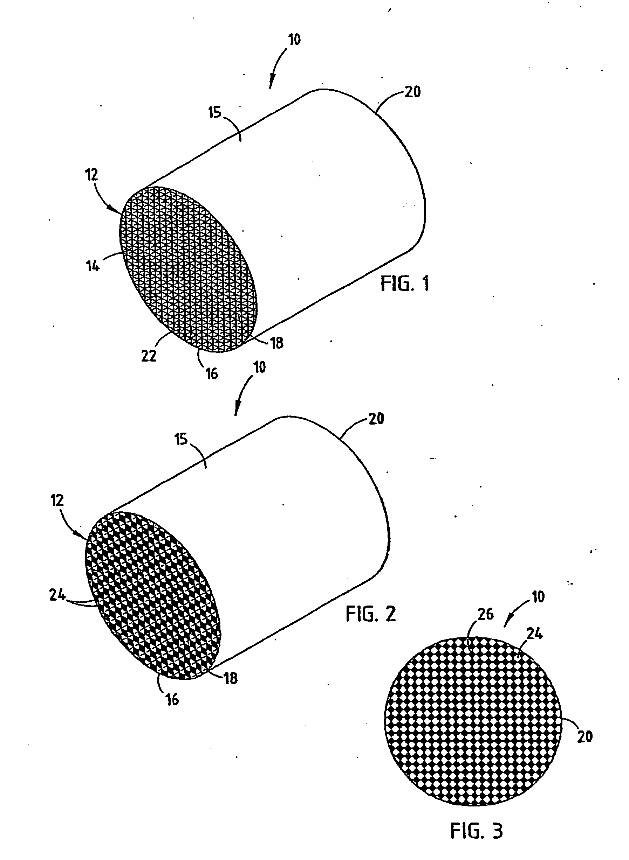

The reference numeral 10 (FIG. 1) generally designates a solid particulate filter body that is generally well known and that may be fabricated utilizing a honeycomb structure 10 formed by a matrix of intersecting, thin, porous walls 14 surrounded by an outer wall 15, which in the illustrated example is provided a circular cross-sectional configuration. The walls 14 extend across and between a first end face 18 and an opposing second channels 22 which also extend between and are open at the end faces 18, 20 of the end face 20, and form a large number of adjoining hollow passages or filter body 10. The outer wall 15 (or skin) defines an outer edge 16 for both the first end face 18 and the second end face 20. To form the filter 10 (FIGS. 2 and 3), one end of each of the cell channels 22 is sealed, a first subset 24 of the cell channels 22 being sealed at the first end face 18, and a second subset 26 of the cell channels 22 being sealed at the second end face 20 of the filter 10. Either of the end faces 18, 20 may be used as the inlet face for the resulting filter 10 when all of the channels 22 are of the same size.

In operation, contaminated fluid (for example including particulate matter, such as exhaust soot) is brought under pressure to an inlet face and enters the filter 10 via those cell channels which have an open end at the inlet face. Because these cell channels are sealed at the opposite end face, i.e., the outlet face of the body, the contaminated fluid is forced through the thin porous walls 14 and into adjoining cell channels which are sealed at the inlet face and open at the outlet face. The solid particulate contaminant in the fluid, which is too large to pass through the porous openings in the walls, is left behind and a cleansed fluid exits the filter 10 through the outlet cells.

For the mass production of such filters and heat exchangers, it is highly desirable to be able to seal selected cell ends as rapidly and as inexpensively as possible. A known method of plugging includes the use of a mask having a number of openings extending therethrough for selectively manifolding honeycomb structures in the fabrication of solid particulate filter bodies (such as shown in US 4,411,856; US 4,427,728; US 4,557,682; and US 4,557,773). Heretofore, these masks have typically been used in conjunction with a foam-type cement that is formed into a paste by mixing ceramic raw material with an aqueous binder, such as methylcellulose, plasticizer and water (see US 4,455,180, for example). When using this foam-type cement, both ends of the honeycomb structure are covered with flexible or rigid plates having holes through which the cement is pushed into the ends of the cells. In one particular application, the cement is pressed through an associated mask by a servo-driven piston based plugging machine (See FIG. 1 of US 4,557,682), wherein the machine displaces a charge of cement to create the required plugs within the cell channels.

Document US-A-4 557 773 discloses an apparatus for plugging a subset of cells of a honeycomb structure according to the preamble of claim 11, as well as a method for plugging a subset of cells of a honeycomb structure.

There are numerous disadvantages to this particular process, including the high variability in overall plug length, misalignment of the mask with respect to the filter body, thereby causing unplugged cells, and the creation of unplugged cells due to dry cement that "flakes-off" into fresh cement prior to application. This process generally uses masks pre-formed of silicon that are reused for plugging multiple honeycomb structures. Reusable masks can be less effective at plugging the cells because they cannot adjust to variations between the honeycomb structures. The equipment used in these conventional processes is also incompatible with laser-cut polymer masks as these laser-cut masks stay with the cemented body when the associated plugging machines open for part release (See US 4,557,773). Another problem with silicon masks (as shown in US 4,427,728) is that they are sized so as to align with the outer edges of the filters, thereby allowing the cement to flow along and adhere to an outer edge of the filter.

Masks have also been formed for manifolding cells that are regularly interspaced among substantially mutual parallel rows and substantially mutually parallel columns at an open face of a honeycomb structure by applying strips of adhesive backed flexible webbing impermeable to the sealed material, such as masking tape, over selected rows and columns of cells. Alternatively, these cells are created by providing a matrix of spaced, overlaid strips of resilient, impermeable and reusable material such as metal foil, which are then joined together and fitted, with or without an underlying gasket, over the open face of the structure with the openings through the matrix and gasket position opposite the cell channels to be charged. By providing a honeycomb structure with cells arranged in mutually parallel rows and mutually parallel columns and covering alternative rows and alternative columns of cells with strips of suitable flexible materials such as masking tape or the joined thin metal strips, the open ends of half of the subset of cells arranged in a checkered pattern across the open face are exposed. After filling the ends of the strips, the strips are removed and strips are applied covering the remaining alternative rows and remaining alternative columns, thereby exposing the open ends of the remaining half of the subset of cells of the checkered pattern of the end face for filling.

Both of these embodiments provide greater flexibility in dealing with the surface height variations and provide better masking of the cell ends not to be charged, including those which may be damaged, than does the rigid plate embodiment. However, both embodiments must typically be applied twice to each end face. This is a significant limitation with respect to the tape strips which must be individually applied across each end face, a time-consuming task. The reusable matrix and gasket of the second embodiment may be more quickly applied and removed, but like the rigid plate embodiments, is less easily adapted to distortions in the cell locations of the end faces. Moreover, increasing cellular densities render such an approach unworkable.

Additionally, variations in the surface of the plugging material on the plugging apparatus can be transferred into the substrate causing variations in the length of intrusion of the plugs. Therefore, it is desirable to have an initial surface that is substantially flat and pushed in with uniform force to allow all resulting plugs to be similar in length. The length of intrusion should be deep enough to secure a good blocking of the sealed channels, but is desirably limited because an increase in plug length results in the loss of porous wall surface area.

A method for manifolding or plugging extruded honeycomb structures, such as ceramic particulate traps for diesel engines, is desired that uses the existing cement composition and rheology, is compatible for use with lasercut polymer masks, reduces plug length variability, minimizes missing plugs, and eliminates overflow of the plugging material from the cell channels to which the plugging material is applied. The method should also be highly repeatable and accurate, easily applied, and reduce unintended deformations of the honeycomb structure.

### Summary of the Invention

One aspect of the present invention is to provide a method for plugging a subset of cells of a honeycomb structure according to claim 1.

Another aspect of the invention is to provide an apparatus for plugging a subset of cells of a honeycomb structure according to claim 11.

The present inventive method and apparatus may utilize existing cement compositions and rheologies, and are compatible for use with lasercut polymer masks. Advantageously, the method and apparatus of the invention reduce plug length variability, minimizes missing plugs, and eliminates overflow of the plugging material from the cell channels to which the plugging material is applied. The method and apparatus described herein are also highly repeatable and accurate, easily applied, and reduce unintended deformations of the honeycomb structure, and are particularly well adapted for the proposed use.

These and other advantages of the invention will be further understood and appreciated by those skilled in the art by reference to the following written specification, claims and appended drawings.

### Brief Description of the Drawings

FIG. 1 is a perspective view of an extruded filter body including a first end having a plurality of open-ended cell channels;

FIG. 2 is a perspective view of the extruded filter body, wherein a first subset of the cell channels are plugged, and a second subset of the cell channels are open-ended;

FIG. 3 is a side view of the filter body including a second end, wherein the first subset of cells are open-ended, and the second set of sub cells are plugged;

FIG. 4 is a side view of the extruded filter body as covered by a mask, and a piston of a plugging machine covered by a thin film material and a patty of plugging material, located on a film-covered piston assembly, wherein the filter body is cross-sectioned;

FIG. 5 is a perspective view of the first end of the extruded filter body as covered by a cross-sectioned mask;

FIG. 6 is a side view of the extruded filter body, wherein peripheral edges of the mask are sealed with peripheral edges of a thin film;

FIG. 7 is a side view of the extruded filter body, wherein the plugging material is located within select cell channels of the filter body;

FIG. 8 is a cross-sectioned side view of an apparatus which does not form part of the invention.

FIGS. 9 and 10 are partial frontal views of an embodiment of clamping portion which does not form part of the invention;

FIG. 11 is a cross-sectioned partial side view of an embodiment of moveable flow control member which does not form part of the invention;

FIG. 12 is a flow chart showing the steps according to a method which does not form part of the invention;

FIG. 13 is a cross-sectioned frontal view of an embodiment of the cutting apparatus which does not form part of the invention;

FIG. 14-15 are partial cross-sectioned side view of an embodiment of the cutting apparatus illustrating the cutting operation which does not form part of the invention;

FIG. 16 is a flow chart showing the steps according to a method which does not form part of the invention;

FIG. 17 is a cross-sectional frontal view of a positioner according to an exemplary embodiment which does not form part of the invention; and

FIG. 18 is a frontal view of a moveable flow control member according to an exemplary embodiment which does not form part of the invention.

FIG. 19 is a side view of a cleaning member according to an exemplary embodiment which does not form part of the invention.

### Detailed Description of the Preferred Embodiments

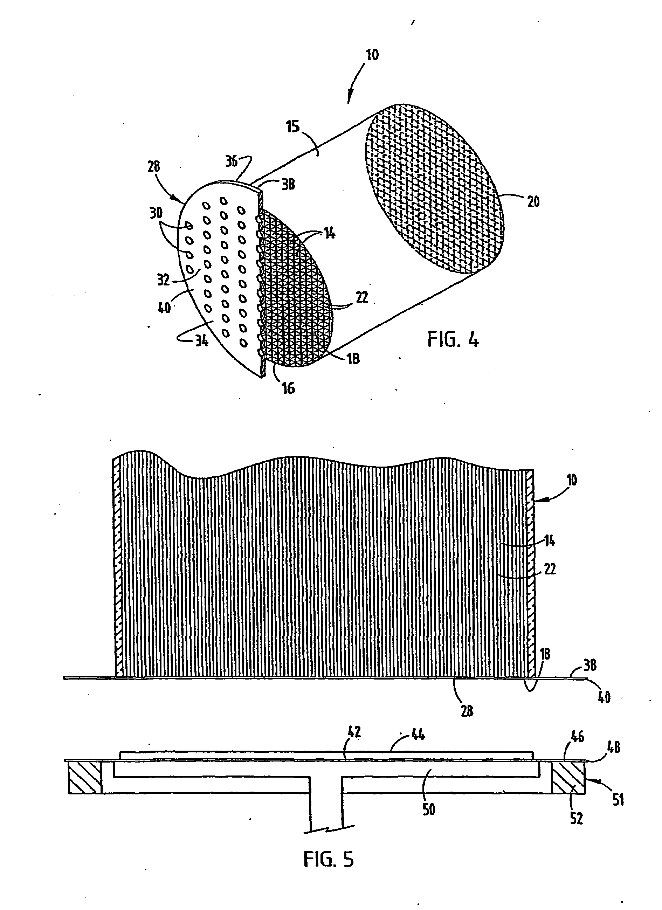

For purposes of description herein, the terms "upper," "lower," "right," "left," "rear," "front," "vertical," "horizontal," and derivatives thereof shall relate to the invention as oriented in FIGS. 1 and 4. However, it is to be understood that the invention may assume various alternative orientations and step sequences, except where expressly specified to the contrary. It is also to be understood that the specific devices and processes illustrated in the attached drawings, and described in the following specification are exemplary embodiments of the inventive concepts defined in the appended claims. Hence, specific dimensions and other physical characteristics relating to the embodiments disclosed herein are not to be considered as limiting, unless the claims expressly state otherwise.

Honeycomb structures for solid particulate filter, bodies, such as the filter body 10, and other applications may be formed of a variety of materials including ceramics, glass-ceramics, glasses, metals, and by a variety of methods depending upon the material selected. Honeycomb structures having the necessarily uniformed thin, porous and interconnected walls for solid particulate filtering applications are preferably fabricated from plastically formable and sinterable finely divided particles of substances that yield a porous, centered material after being fired to effect their centering. Suitable materials include metallics, ceramics, glass-ceramics, and other ceramic based mixtures. A method of forming such a ceramic honeycomb monolith from an extruded cordierite material which is preferred in solid particulate filtering applications is described and claimed in U.S. Patent No. 5,258,150 co-assigned to the present assignee.

According to embodiments of the invention, either the first end face 18 or the second end face 20 is covered with a mask 28 as shown in FIG. 4, wherein the covering step comprises forming the mask 28 according to the processes as described in U.S. Patent Nos. 4,557,773 and 6,673,300, each co-assigned to the present assignee. In the illustrated example, the first end face 18 is covered by the mask 28 that includes an adhesive backed, pressure-sensitive thin transparent or translucent film formed from a thermoplastic material, preferably a polyester or PET material. However, other materials such as polyethylene, polypropylene, or polyurethane may be employed. Openings are created through the mask corresponding to a selected second subset 26 of cell channels 22 by means of an opening forming tool (for example, a laser) controlled by an optical image analyzer, as described in the references noted above.

An exemplary mask 28 includes a central body 32 with an outer face 34 and an opposing inner-face 36 with the openings 30 extending between the outer face 34 and the inner-face 36. The openings 30 are positioned within the body 32 so as to coincide with the ends of the second subset 26 of cell channels 22 which are to be charged with plugging material. Preferably, the openings 30 are suitably sized to expose the open ends of the second subset 26 of the cell channels 22 but not so large as to expose the adjacent first subset 24 of the cell channels 22. It should be noted that larger openings can be provided to expose several adjacent cell channels 22 if desired. The mask 28 includes an outer edge 38 and an outer periphery 40 that extends radially outwardly from the outer edge 16 of the first end face 18.

The body 32 of the mask 28 is adhered to intersecting matrix of walls 14 of the honeycomb structure 10 to hold the mask 28 in position: The mask can be adhered with acrylic adhesive or any similar adhesive substance, and, in one embodiment, is applied to the mask 28 before placing the mask on the substrate 10.

The next step involves forming plugs within the selected subset of cell channels 22. In one embodiment shown in FIG. 5, a thin film material 42, preferably comprising a PET, is covered by a plug, e.g., a flat patty, of a plugging material 44, preferably comprising a ceramic raw material with an aqueous binder, such as methylcellulose, plasticizer and water. The film material 42 includes an outer periphery 46 and an outer edge 48 each extending outwardly from the outer edge 16 of the substrate body 10, as described below. As illustrated, the plugging material 44 is located with respect to the film material 42 such that the outer periphery 46 of the film material 42 is free from the plugging material 44. In the illustrated example, the plugging material 44 is provided in the form of a flat patty of a uniform thickness; however, varying thicknesses may also be used.

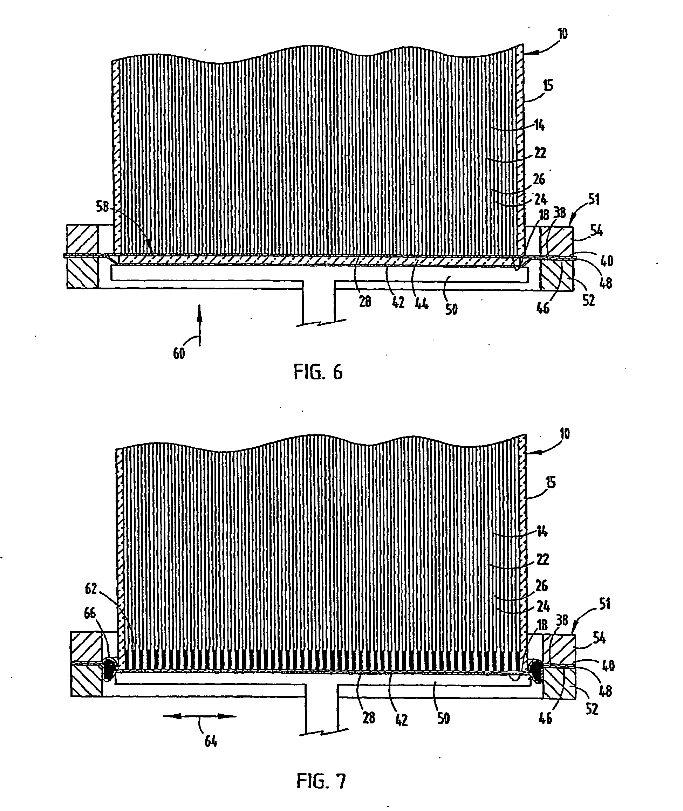

The film material 42 with the plugging material 44 thereon is situated upon a servo-driven piston based plugging machine that includes a preferably planar, piston 50 that is surrounded by a clamping assembly 51 having a first clamping portion 52 and a second clamping portion 54 as shown in FIGS. 6 and 7. Piston 50 is shaped to correspond to the honeycomb structure being plugged and is roughly of a comparable size to the part. The first and second clamping portions 52, 54 of the clamping assembly 51 are used to seal the outer periphery 40 of the mask 28 with the outer periphery 46 of the film material 42. A force in a direction and as represented by directional arrow 60 is exerted on the film material 42 by the piston 50, thereby forcing the plugging material 44 through the openings 30 of the mask 28 and charging the second subset 26 of the cell channels 22 of the honeycomb structure 10 (FIG. 7) and forming the plurality of plugs 62.

In one example, best shown in FIG. 7, the excess plugging material 44 is forced laterally across the first end face 18 of the honeycomb structure 10 in a direction as indicated and represented by directional arrow 64 and is held within pockets 66 as defined by the outer periphery 40 of the mask 28 and the outer periphery 46 of the film material 42, and as located between the clamping assembly 51 and the piston 50, thereby preventing any excess plugging material from smearing along the outer wall 15 of the honeycomb structure 10. The piston 50 is then retracted away from the first end face 18 of the honeycomb structure 10 and the mask 28 and the film material 42 are removed from the end of the filter body 10. The filter body 10 may then be removed from within the associated plugging machine. It should be noted that the honeycomb structure 10 may be positioned in any orientation during the plugging process, including vertically and horizontally, and further that the second subset 26 of the cell channels 22 located at the second end face 20 and may be plugged simultaneously with the first subset 24 of the cell channels 22, thereby significantly decreasing the overall cycle time of the plugging process.

The present inventive method may utilize existing cement compositions and rheology, and is compatible for use with laser-cut polymer masks, reduces plug length variability, minimizes missing plugs, and eliminates overflow of the plugging material from the cell channels to which the plugging material is applied. The method is also highly repeatable and accurate, easily applied, reduces unintended deformations of the honeycomb structure, and is particularly well adapted for the proposed use.

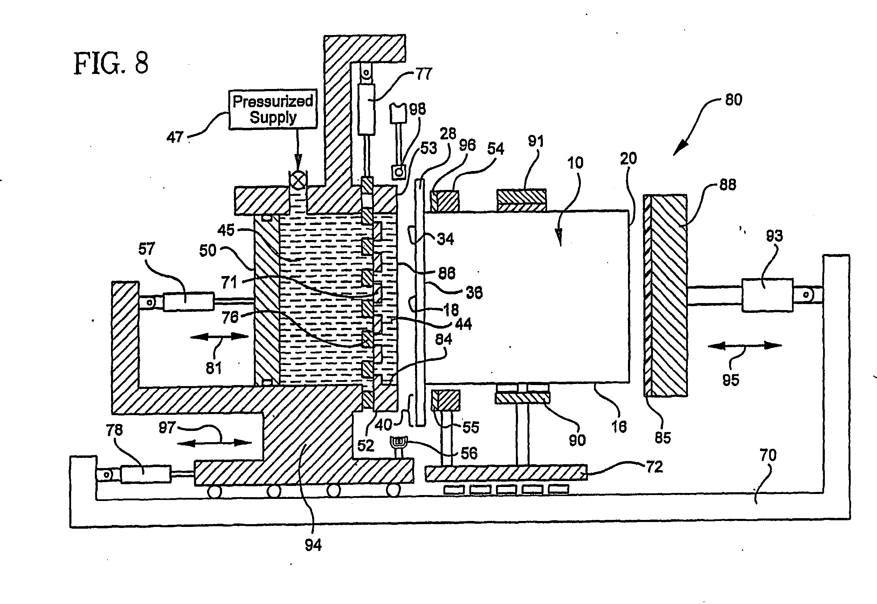

As shown in FIG. 8, an apparatus 80 for plugging a honeycomb structure 10, which does not form part of the present invention, is described. The apparatus 80 is useful for fast plugging of such substrates 10 having adhered to a first end face 18 thereof, a transparent or translucent mask 28. Additionally, the substrate 10 could have another mask (not shown) on a second end face 20. The apparatus 80 includes a volume of plugging material 44, a first clamping portion 52, and a second clamping portion 54. Both clamping portions 52, 54 cooperate to releasably clamp an outer portion 40 of the mask 28.

The outer portion 40 of the mask 28 extends radially outward from the outer edge 16 of the honeycomb structure 10. Mask 28 extends radially outward from the outer edge 16 when a portion of the mask 28, while placed on (adhered) on the substrate 10, extends radially beyond the outer edge 16. In one embodiment, the mask 28 extends roughly 2.54 cm (1 inch) past the outer edge 16 of the substrate 10, but it could extend to any distance sufficient to allow secure clamping of the outer portion 40.

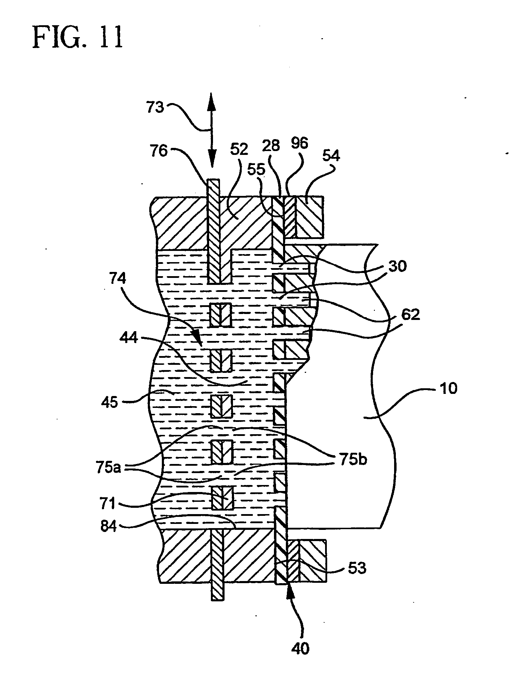

Within the apparatus 80, the volume of plugging material 44 is contained in a pre-plugging chamber 84. The pre-plugging chamber 84 has a shape that generally approximates the shape of the first end face 18 of the substrate 10, for example, round or oval. The pre-plugging chamber 84 contains a volume of plugging material 44, at least a portion of which is provided to form the plugs 62 in the substrate 10 (See Fig. 11). In one embodiment, the pre-plugging chamber 84 is sized to form a patty of plugging material 44. The patty of plugging material 44 in the pre-plugging chamber 84 is substantially uniform in thickness to minimize the effects of compressibility of the plugging material 44. This aids in forming plugs 62 of uniform depth within the substrate 10. '

In an exemplary embodiment, the pre-plugging chamber 84 has a depth which is approximately 1.27 cm (½ inch). Alternatively, the pre-plugging chamber 84 can have any depth that is large enough to insure sufficient plugging material 44 flow such that the entire cross-sectional area is filled. Also, the pre-plugging chamber 84 should be small enough to minimize slumping of the plugging material 44 if the substrate 10 is plugged in a horizontal orientation. Slumping occurs due to the liquid nature of the plugging material 44. When the apparatus is opened while loading a new substrate 10, there is nothing holding the plugging material 44 in the pre-plugging chamber 84. Therefore, given enough time the plugging material 44 will begin to flow out of the pre-plugging chamber 84 and cause a slump in the surface 86 of the material 44 in the pre-plugging chamber 84. Thus, it should be apparent that the mask 28 of the next substrate to be plugged should be quickly sealed between clamping members 52, 54 shortly after removing the prior plugged substrate.

A reservoir 45 is preferably connected with the pre-plugging chamber 84 and also contains plugging material 44. In operation, a piston 50 causes the material 44 in reservoir 45 to pass through aligned passages 75 (see Fig. 11) in a flow control member 74. The movement of the piston 50 transfers the plugging material 44 to refill the pre-plugging chamber 84. The plugging material 44 forced into the pre-plugging chamber 84 concomitantly forces approximately the same amount of the plugging material 44 out of the pre-plugging chamber 84 to fill the selected channels of the substrate 10 to the desired plug depth. The piston 50 moves in the direction of arrow 81, for example, by actuator 57 mounted between the piston 50 and a moveable frame 94.

The flow of plugging material 44 between the reservoir 45 and the pre-plugging chamber 84 is controlled by aligning and misaligning the passages 75a, 75b of the flow control member 74 (FIG. 11). In one embodiment, the flow control member comprises a moveable member 76 such as a moveable shutter plate, and a stationary member 71, preferably the wall of the pre-plugging chamber 84. To allow flow through the flow control member 74, the moveable member 76 is moved to a first position (FIG. 11), where the plurality of apertures 75a are substantially aligned with the like apertures 75b formed in the wall of the pre-plugging chamber 84.

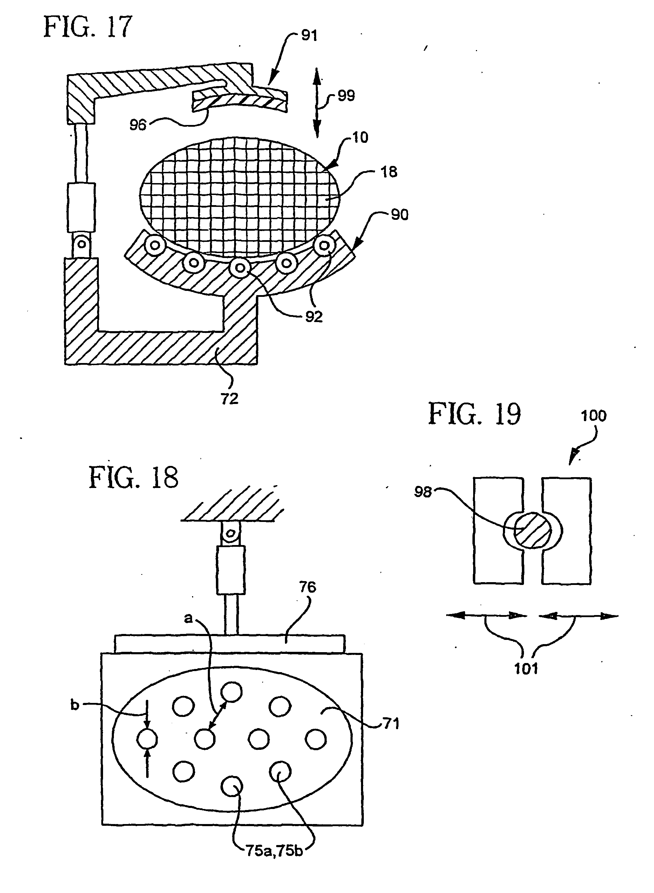

Referring now to FIG. 18, in one exemplary embodiment, the apertures 75a, 75b formed in the moveable 76 and stationary 71 members are circular in shape. The apertures 75a, 75b are preferably equally spaced "a" approximately 0.79 cm (5/16 inch) and have a diameter "b" of approximately 0.64 cm (¼ inch). Alternatively, the apertures 75a, 75b could be of any size, shape, or spatial proximity to allow flow of the plugging material 44 there through, yet still allow sufficient shut off of the flow of material 44 when misaligned. In one preferred embodiment, the apertures 75a, 75b in the moveable 76 and stationary 71 members cover approximately 25 percent of the possible surface of the members, where 100 percent coverage equate to no blocking at all of the plugging material 44 during plugging. In one embodiment, the apertures 75a of the moveable member 76 are substantially similar to the apertures in the stationary member 71, to allow smooth transition of the plugging material 44 from the reservoir 45 to the pre-plugging chamber 84.

To halt the transfer of plugging material 44 into the pre-plugging chamber 84, the moveable member 76 is moved to a second position where the passages 75a of the moveable member 76 and the passages 75b in the stationary member 71 are misaligned (see FIG. 8). The moveable member 76 is linearly slidable in the direction of arrow 73 (FIG. 11) and moves with the aid of an actuator 77. In one embodiment, the moveable member 76 moves less than 0.5 inches and preferably ¼ inch (0.63 cm) and takes less than 1 second to complete shut off. After the misaligning of the plurality of passages 75a, 75b between the moveable member 76 and the stationary member 71, reservoir 45 can be refilled with plugging material 44.

In operation, the flow control member 74 is opened and then the piston 50 moves towards the substrate 10. Once the piston 50 has begun forcing plugging material 44 into the substrate 10, the piston 50 does not stop until the plugs 62 have reached the desired depth. This aids in forming plugs 62 of uniform depth.

Once the piston 50 has forced a desired portion of the plugging material 44 to a desired depth in the substrate 10, the piston 50 stops and is retracted slightly to allow the pressure built up by the plugging process to be relieved. The piston 50 has a sensor (not shown) that measures the force against the piston 50 by the plugging material 44. Once the force of the plugging material 44 against the piston 50 reaches zero or lower, the piston 50 is stopped. At this point the pressure has been relieved and the moveable member 76 is actuated to close (misalign) the passages 75a, 75b between the reservoir 45 and the pre-plugging chamber 84. Once the moveable member 76 has closed the passages, the honeycomb structure 10 can be removed from the pre-plugging chamber 84 by first separating and then cutting adjacent the pre-plugging chamber 84 (later described). Once the flow control member 74 is closed, the reservoir 45 can be refilled with plugging material 44. To refill the reservoir 45, a pressurized supply 47 (Fig. 8) of plugging material 44 is connected to the reservoir 45. A valve is opened to allow plugging material 44 to flow into the reservoir 45 as the piston 50 is retracting.

The depth of intrusion of the plugging material 44 (i.e. length of plugs 62) into the honeycomb structure 10 is controlled by many variables. One such control is the speed of actuator 57 and resulting pressure and flow rate. In one embodiment, to get uniform flow of plugging material 44 into the substrate 10, the piston 50 is moved at a rate of less than 2 mm/s and resulting in a pressure of between about 689.5 and 5171 k.Pa (100 and 750 psi) on the plugging material 44. Further control of the plug depth may be achieved by controlling the viscosity, of the plugging material 44. Viscosity of the plugging material 44 is limited to control the occurrence of slumping when plugging a substrate 10 horizontally.

Referring now to FIG. 11, in a preferred implementation the first clamping portion 52 includes a first surface 53 positioned about and surrounding an outer portion of, the pre-plugging chamber 84. Likewise, the second clamping portion 54 comprises a second surface 55, the second surface 55 preferably being generally opposite, and parallel to, the first surface 53. In one embodiment, the second clamping portion 54 includes a compliant face 96 of elastomer or polymer material, preferably polyurethane, that is deformed to improve a seal while clamping the mask 28. To clamp the mask 28, the first surface 53 is brought into contact with the outer portion 40 of the mask 28. The second surface 55 is likewise brought into contact with the outer portion 40 of the mask 28. The surfaces compress the mask 28 with sufficient force to seal the pre-plugging chamber 84 such that plugging material is hindered from leaking out onto the sides of the substrate 10, or out between the surface 53 and the mask 28, during a step of transferring the material 44. Of course, the first 53 and second 55 surfaces need not be planar or parallel, and any configuration that accomplishes sealing may be employed.

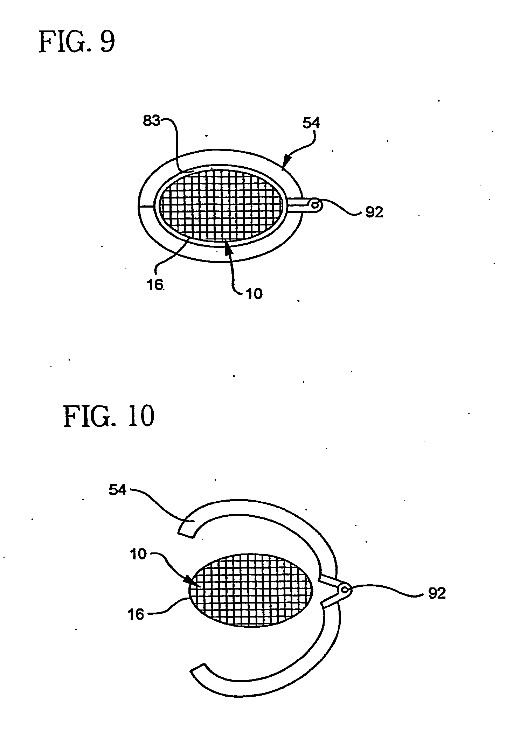

As shown in FIGS. 9-10, the second clamping portion 54 comprises a ring which substantially surrounds the outer circumference of the substrate 10. Preferably, the inner circumference of the second clamping portion 54 is larger radially than the outer edge 16 of the honeycomb structure 10. The gap 83 formed between the inner circumference of the second clamping portion 54 and the outer edge 16 of the substrate 10 can be controlled to control the depth of intrusion of the plugs 62 in the near the outer edge 16 of the substrate 10. A larger gap 83 results in shorter plugs 62 near the outer edge 16, and a smaller gap 83 results in longer plugs 62. Therefore, in one example, the gap 83 is set such that the plugs 62 near the outer edge 16 are substantially the same depth as the other plugs 62 resulting in uniform plug depth across the substrate. In one example, the gap 83 is between 2.54 mm and (0.1 inches) 12.7 mm (0.5 inches), and is preferably about 6.4 mm (0.25 inches).

As shown in FIGS. 9 and 10, the second clamping portion 54 preferably comprises two pieces that can separate in some way to allow a substrate 10 to be placed inside. In one example, the second clamping portion 54 opens with the use of a hinge 92. In another example, the second clamping portion 54 opens by sliding the two parts in opposite linear directions, as in a clevis. In operation, the portion 54 is opened and the substrate 10, having mask 28 adhered to the end face 18 thereof, is inserted therein.

Additionally, prior to plugging the substrate 10, it must be positioned relative to the volume of plugging material 44 in the vertical and lateral directions, by a positioner 90. Positioner 90 is on a moveable frame 72 that extends and retracts (into and out of the paper in FIG. 8) Alternatively, the positioner 90 may be preset in a stationary position, such that a honeycomb structure 10 can be placed on the positioner 90 and is then in the correct location for plugging.

Referring now to FIG. 17, the positioner 90 preferably includes a positioning clamp 91 to secure the substrate 10 during movement and plugging. The positioning clamp 91 moves up and down in direction of arrow 99 to release and secure the substrate 10. In one embodiment, the positioning clamp 91 includes a compliant face 96 of elastomer or polymer material to cushion and grip the substrate 10 and is contoured to approximate the shape of the substrate 10. The positioner 90, in one embodiment, includes rollers 92 mounted to the support frame 72 allowing an oval shaped substrate 10 to use gravity to rotationally center itself. In another embodiment, positioner 90 includes a V-chuck to hold a round shaped substrate 10.

In operation the positioner 90, including positioning clamp 91, extends and the positioning clamp 91 is retracted away from the honeycomb structure 10 (see FIG. 17) to allow a honeycomb structure 10 to be placed on the postioner 90. An actuator or other suitable means may be used to move the positioner 90 and positioning clamp 91. Once a substrate 10 has been placed on the positioner 90, the positioning clamp 91 is closed to secure the substrate 10 during movement of the positioner 90. The positioner 90 then orients the honeycomb structure 10 relative to the pre-plugging chamber 84 such that the first end face 18 of the substrate 10 is in axial alignment with the pre-plugging chamber 84. Alternatively, any suitable method of positioning the substrate 10 relative to volume of plugging material 44, including by hand, could be implemented. During movement of the substrate 10 by the positioner 90, the second clamping portion 54 is opened to accept the substrate 10. Once the substrate 10 is aligned with the pre-plugging the clamping portion 54 closes around the substrate10.

Again referring to FIG. 8, for restraint of movement of the honeycomb structure 10 during the plugging process, the apparatus 80 further includes a backup member 88, which is preferably retractable. If not supported, the high pressures encountered during plugging move the substrate 10. The backup member 88 protects the substrate 10 by including a compliant face 85 of elastomer or polymer material to cushion against the second end face 20, and by supplying uniform pressure across the second end face 20. An actuator 93 or other suitable means may be employed to move and retract the position of the backup member 88 along directional arrow 95. The actuator 93 moves the backup member 88 relative to the first frame 70 of the apparatus 80 thereby positioning it to contact the second end face 20 of the substrate 10 (which may have a mask 28 adhered thereto also) when the substrate 10 is being plugged.

The apparatus 80 may also include a moveable frame 94 which moves in the direction of arrow 97. The moveable frame 94 holds the pre-plugging chamber 84, the reservoir 45, flow control member 74 and the piston 50. To engage the substrate 10, moveable frame 94 moves the pre-plugging chamber 84 into contact with the mask 28 of the honeycomb structure 10. The frame 94 then pushes the substrate 10 and mask 28 such that the mask's outer portion 40 is clamped between the first surface 53 and the second surface 55 as shown in FIG. 11. During the clamping, at least a portion of the outer portion 40 of the mask 28 becomes adhered to the second surface of the second clamp portion 54 due to the adhesive on the inner face 36 of the mask 28. Once the mask 28 has been clamped, it is sealed against the surface 53 of the first clamp portion 52 thereby sealing the pre-plugging chamber 84 and readying the assembly for transfer of the plugging material 44 through the openings 30 in the mask to form plugs 62 as shown in FIG. 11. In operation, when the substrate 10 is pushed back to clamp the mask 28 the second face 20 of the substrate 10 also comes into contact with the backup member 88. Additionally, the positioning clamp 91 may be opened to allow the substrate 10 to slide on the positioner 90. Once the substrate 10 is in its plugging location the positioning clamp 91 is moved to secure the substrate 10 once again.

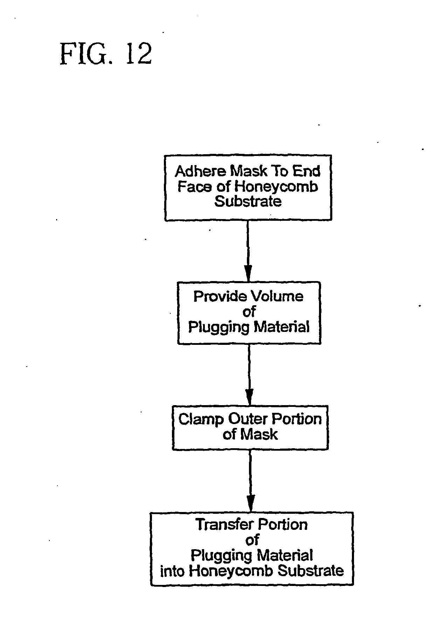

As shown in FIG. 12, a method of plugging a honeycomb structure 10, which does not form part of the present invention, comprises the steps of, adhering a mask 28 to a first end face 18 of the honeycomb structure 10, providing a volume of plugging material 44, clamping an outer portion 40 of the mask 28, and transferring a portion of the plugging material 44 into the honeycomb structure 10.

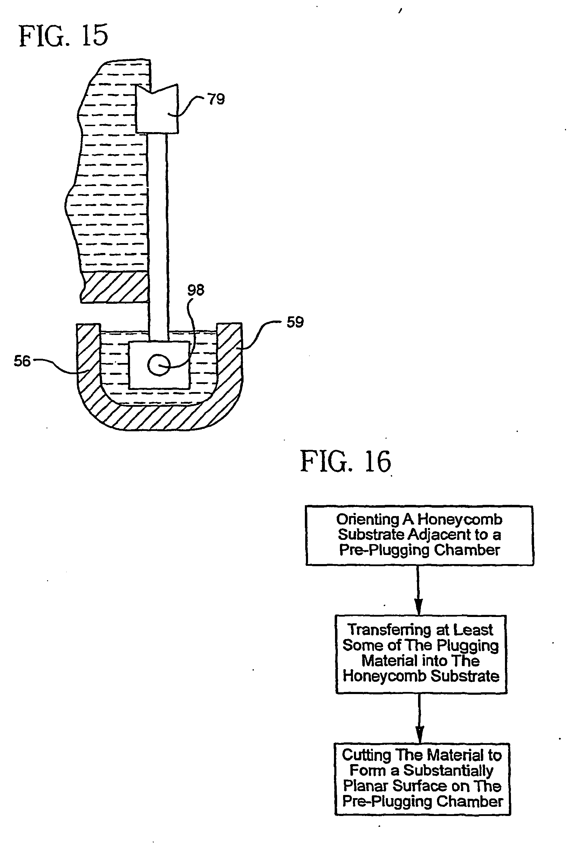

As best shown in FIG. 16, a method of plugging a honeycomb structure 10 is provided. The method comprises the steps of orienting a honeycomb structure 10 adjacent to a pre-plugging chamber 84 of plugging material 44, transferring at least some of the plugging material 44 into the honeycomb structure 10, and cutting the plugging material 44 to form a substantially planar surface on the plugging material 44 in the pre-plugging chamber 84. In one embodiment, the step of transferring the plugging material 44 into the substrate is performed with the honeycomb substrate 10 oriented horizontally, as shown in FIG. 8.

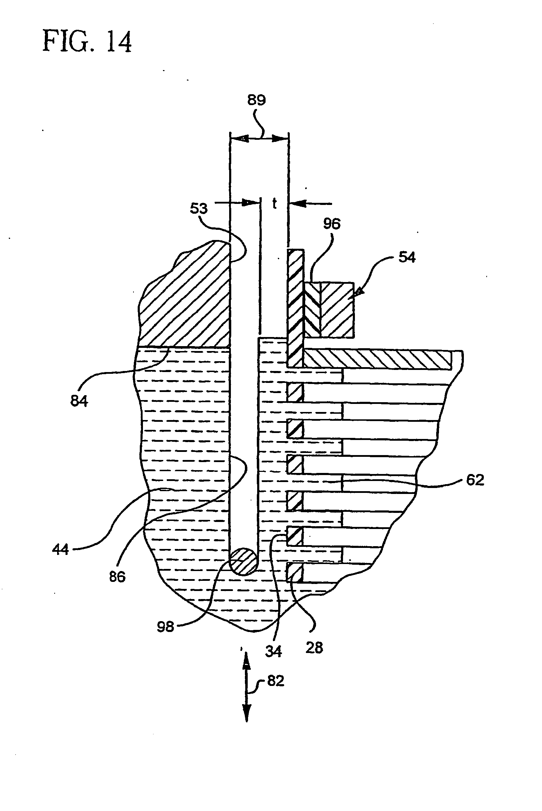

Once the transfer step has taken place and after the moveable member 76 has closed off the reservoir 45, the pre-plugging chamber 84 is separated from the mask 28 and the honeycomb structure 10 thereby forming a gap 89 as shown in FIG 14. The moveable frame 94 causes the separation by moving relative to the frame 70 with actuator 78. The step of separating readies the plug material for the later step of cutting. According to embodiments of the invention, the separation, i.e., the gap 89 is no more than 6.4mm (¼ inch) during the step of cutting and is preferably about 3 mm.

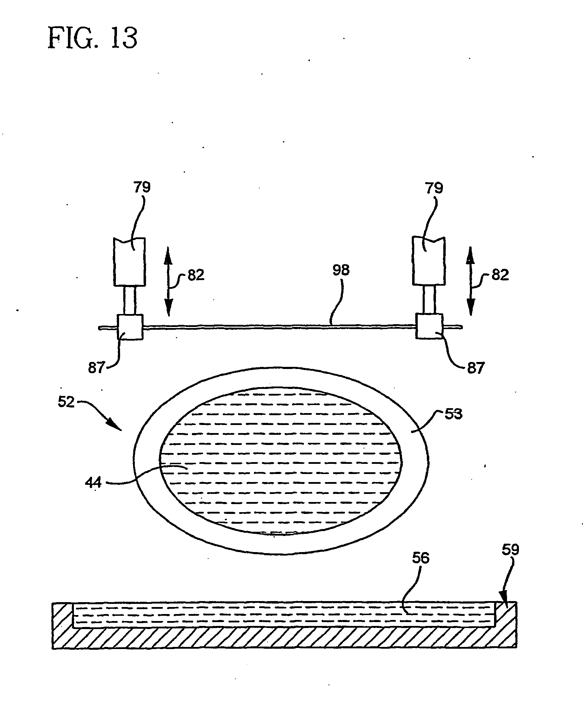

After the step of separating is complete, a cutting member 98, preferably a wire, which is oriented adjacent to the outer face 34 of the mask 28 is actuated and moved through the plugging material 44 to cut the same. Alternatively, the cutting member 98 could be shaped as a knife or any other shape suitable to form a substantially flat surface 86 on the plugging material 44 in the pre-plugging chamber 84. The cutting member 98 is preferably movably mounted between two mounting blocks 87 (Fig. 13) and each block is moved by respective actuators 79. Alternatively, the cutting member 98 could be moved across the plugging material in any suitable manner, including by hand.

The actuators 79 move the mounting blocks 87 and, thus, the wire 98 in the direction of arrows 82 and pass the wire substantially entirely through the plugging material 44, preferably from top to bottom. The cutting member 98 is moved adjacent a chamber of plugging material 44, preferably a pre-plugging chamber, but any chamber that can be used for plugging and containing plugging material will work. Preferably, the cutting member 98 cuts in close proximity to the first surface 53 and adjacent the mask 28. In one example, the cutting member 98 contacts the first surface 53 while cutting, thereby ensuring a surface 86 on the plugging material 44 that is in the same plane with the first surface 53. The surface 86 is then ready to be transferred directly into another end of a honeycomb structure 10 or otherwise into the next substrate to be plugged. The step of cutting is preferably performed at between 0.75 mm/s and 5 mm/s. In one embodiment, the cutting member 98 is approximately 0.81mm (0.032 inches) in diameter and made of hardened stainless steel music wire or other material with a suitable tensile strength to withstand moving through the plugging material 44. After the cutting member 98 has passed through the plugging material 44, it is moved away from the resulting surface 86 such that when the cutting member 98 is retracted back to the home position (FIG. 13) the member 98 does not contact the surface 86. Upon being cut, the plugged substrate 10 may be removed from the positioner 90 by retracting clamp 91, opening second clamp portion 54 and retracting backup member 88.

The step of cutting forms a planar, i.e., a substantially flat surface 86 on a remaining portion of the plugging material 44 in the pre-plugging chamber 84. This readies the pre-plugging chamber 84 for the plugging operation for the next substrate. By the term "substantially flat," what is meant is that the variations across the surface 86 from the average varies by no more than 2 mm immediately after the step of cutting; more preferably less than 1 mm. Additionally, the step of cutting leaves a thickness "t" of less than 6.4 mm (0.25 inches) of plugging material 44 on the outer face 34 of the mask 28.

After each cutting pass, the cutting member 98 is preferably cleaned. The cleaning process is, in one example, accomplished as shown in FIGS. 13 and 15 by passing the cutting member 98 into a container 59 including a fluid 56 and washing the cutting member 98. The fluid 56 is preferably water or any other solvent which will wash away or dissolve the plugging material 44. Optionally, the step of cleaning may include forced agitation of the fluid or flow into the container 59 in a way which causes the cutting member 98 to be subjected to a higher pressure flow of fluid. Alternatively, the step of cleaning may be accomplished using a cleaning member such as a scraper 100 as shown in FIG. 19. The scraper 100 is clamped around the cutting member 98 by moving in the direction of arrows 101. The scraper 100 is then moved across the length of the cutting member 98, thereby scraping any plugging material 44 off of the member 98. Upon reaching a mounting block 87 (Fig. 13) of the cutting member 98, the plugging material 44 may be sprayed, or otherwise cleaned off of the scraper 100 and cutting member 98.

In the foregoing description, it will be readily appreciated by those skilled in the art that modifications may be made to the method and apparatus for plugging honeycomb substrates without departing from the concepts disclosed herein. Such modifications are to be considered as included in the following claims, unless these claims by their language expressly state otherwise. Accordingly, the scope of the present invention should be considered in terms of the following claims and is understood not to be limited to the details of structure and operation shown and described in the specification and drawings.

## Claims

1. A method for plugging a subset of cells (26) of a honeycomb structure (10), comprising:
covering a first end face (18) of the honeycomb structure with a mask (28) that comprises a body (32) having an outer edge (38) and a plurality of openings (30) extending therethrough, the outer edge of the body extending outwardly of at least a portion of the outer edge (16) of first end face (18);
providing a film material (42) having an outer edge (48) that also extends outwardly of at least a portion of the outer edge (16) of the first end face (18);
providing a plug of material (44) upon the film material;
sealing the mask and the film material to one another about at least a portion of an outer periphery (40) of the mask and at least a portion of an outer periphery (46) of the film material; and
applying a force to the film material forcing the plug of material through the mask and into the subset of cells.

2. The method of claim 1, wherein the outer edge of the mask (38) and the outer edge (48) of the film material (42) extend outwardly about the entire outer edge (16) of the first end face (18).

3. The method of claim 1, wherein the seal step includes sealing the entire outer periphery of the mask (40) to the entire outer periphery of the film material (46).

4. The method of claim 1, wherein the step of providing the mask includes providing a mask that comprises a polymer material.

5. The method of claim 1, wherein the step of applying a force to the film includes providing a piston (50) that applies the force to the film material.

6. The method of claim 1, further including:
positioning the honeycomb structure in a substantially vertical position prior to sealing the mask and the film material to one another.

7. The method of claim 1, wherein the step of providing the plug of material includes providing the plug of material with a substantially uniform thickness.

8. The method of claim 1, further including:
covering a second end face (20) of a honeycomb structure with a second mask that comprises a body having an outer edge and a plurality of openings extending therethrough, the outer edge of the body of the second mask extending substantially outwardly of at least a portion of the outer edge of the second end face;
providing a second film material having an outer edge that extends substantially outwardly of at least a portion of the outer edge of the second end face;
providing a second plug of material upon the second film material;
sealing the second mask and the second film material to one another about at least a portion of an outer periphery of the second mask and at least a portion of an outer periphery of the second film material; and
applying a second force to the second film material forcing the second plug of material through the second mask and into a second subset of cells.

9. The method of claim 8, wherein the steps of applying the force to the film and the second force to the second film are completed substantially simultaneously.

10. The method of claim 1, wherein the step of providing the plug of material includes providing a plug of material comprising a ceramic material.

11. An apparatus for plugging a subset of cells (26) of a honeycomb structure (10),
**characterized by**:
a clamping assembly (51) having a first clamping portion (52) and a second clamping portion (54) opposing the first claiming portion wherein the clamping portion cooperate to clamp an outer edge (38) of a mask (28) adhered to a first end face (18) of the honeycomb structure (10) and an outer edge (48) of a film (42) adjacent the outer edge of the mask wherein the mask and film have a plugging material (44) contained in a chamber formed between them, and
a piston (50) operative with the film and adapted to force the plugging material through the mask and into the subset of cells.

## Patentansprüche

1. Verfahren zum Verschließen einer Untermenge von Zellen (26) einer Wabenstruktur (10), umfassend:
Bedecken einer ersten Endfläche (18) der Wabenstruktur mit einer Maske (28), die einen Körper (32) mit einem Außenrand (38) und mehreren sich dort hindurch erstreckenden Öffnungen (30) umfasst, wobei sich der Außenrand des Körpers von mindestens einem Teil des Außenrands (16) der ersten Endfläche (18) nach außen erstreckt;
Bereitstellen eines Folienmaterials (42) mit einem Außenrand (48), der sich auch von mindestens einem Teil des Außenrands (16) der ersten Endfläche (18) nach außen erstreckt;
Vorsehen eines Materialstopfens (44) auf dem Folienmaterial;
Abdichten der Maske und des Folienmaterials gegeneinander um mindestens einen Teil eines Außenumfangs (40) der Maske und mindestens einen Teil eines Außenumfangs (46) des Folienmaterials herum; und
Anlegen einer Kraft an das Folienmaterial, um den Materialstopfen durch die Maske und in die Untermenge von Zellen zu drücken.

2. Verfahren nach Anspruch 1, wobei sich der Außenrand der Maske (38) und der Außenrand (48) des Folienmaterials (42) um den gesamten Außenrand (16) der ersten Endfläche (18) herum nach außen erstrecken.

3. Verfahren nach Anspruch 1, wobei der Abdichtungsschritt Abdichten des gesamten Außenumfangs der Maske (40) gegen den gesamten Außenumfang (46) des Folienmaterials umfasst.

4. Verfahren nach Anspruch 1, wobei der Schritt des Bereitstellens einer Maske Bereitstellen einer Maske umfasst, die ein Polymermaterial umfasst.

5. Verfahren nach Anspruch 1, wobei der Schritt des Anlegens einer Kraft an die Folie Bereitstellen eines Kolbens (50) umfasst, der die Kraft an das Folienmaterial anlegt.

6. Verfahren nach Anspruch 1, weiterhin umfassend:
Positionieren der Wabenstruktur in einer im Wesentlichen vertikalen Position vor dem Abdichten der Maske und des Folienmaterials gegeneinander.

7. Verfahren nach Anspruch 1, wobei der Schritt des Vorsehens des Materialstopfens Vorsehen eines Materialstopfens mit einer im Wesentlichen gleichförmigen Dicke umfasst.

8. Verfahren nach Anspruch 1, weiterhin umfassend:
Bedecken einer zweiten Endfläche (20) der Wabenstruktur mit einer zweiten Maske, die einen Körper mit einem Außenrand und mehreren sich dort hindurch erstreckenden Öffnungen umfasst, wobei sich der Außenrand des Körpers der zweiten Maske von mindestens einem Teil des Außenrands der zweiten Endfläche im Wesentlichen nach außen erstreckt;
Bereitstellen eines zweiten Folienmaterials mit einem Außenrand, der sich von mindestens einem Teil des Außenrands der zweiten Endfläche im Wesentlichen nach außen erstreckt;
Vorsehen eines zweiten Materialstopfens auf dem zweiten Folienmaterial;
Abdichten der zweiten Maske und des zweiten Folienmaterials gegeneinander um mindestens einen Teil eines Außenumfangs der zweiten Maske und mindestens einen Teil eines Außenumfangs des zweiten Folienmaterials herum; und
Anlegen einer zweiten Kraft an das zweite Folienmaterial, um den zweiten Materialstopfen durch die zweite Maske und in die zweite Untermenge von Zellen zu drücken.

9. Verfahren nach Anspruch 8, wobei die Schritte des Anlegens der Kraft an die Folie und der zweiten Kraft an die zweite Folie im Wesentlichen gleichzeitig beendet werden.

10. Verfahren nach Anspruch 1, wobei der Schritt des Vorsehens des Materialstopfens Vorsehen eines Materialstopfens umfasst, der ein Keramikmaterial umfasst.

11. Vorrichtung zum Verschließen einer Untermenge von Zellen (26) einer Wabenstruktur (10),
**gekennzeichnet durch**
eine Klemmanordnung (51) mit einem ersten Klemmteil (52) und einem zweiten Klemmteil (54), das dem ersten Klemmteil gegenüberliegt, wobei die Klemmteile zusammenwirken, um einen Außenrand (38) einer auf einer ersten Endfläche (18) der Wabenstruktur (10) geklebten Maske (28) und einen Außenrand (48) einer Folie (42) neben dem Außenrand der Maske festzuklemmen, wobei die Maske und die Folie ein in einer zwischen ihnen gebildeten Kammer enthaltenes Stopfenmaterial (44) aufweisen, und
einen Kolben (50), der mit der Folie zusammenwirkt und dazu ausgeführt ist, das Stopfenmaterial **durch** die Maske und in die Untermenge von Zellen zu drücken.

## Revendications

1. Procédé de bouchage d'un sous-ensemble de cellules (26) d'une structure en nid d'abeille (10), comprenant les étapes suivantes:
couvrir une première face d'extrémité (18) de la structure en nid d'abeille avec un masque (28) qui comprend un corps (32) présentant un bord extérieur (38) et une pluralité d'ouvertures (30) qui s'étendent à travers celui-ci, le bord extérieur du corps s'étendant à l'extérieur d'au moins une partie du bord extérieur (16) de la première face d'extrémité (18);
fournir une matière de film (42) présentant un bord extérieur (48) qui s'étend également à l'extérieur d'au moins une partie du bord extérieur (16) de la première face d'extrémité (18);
disposer un bouchon de matière (44) sur ladite matière de film;
souder le masque et la matière de film l'un à l'autre autour d'au moins une partie d'une périphérie extérieure (40) du masque et d'au moins une partie d'une périphérie extérieure (46) de la matière de film; et
appliquer une force à la matière de film pour pousser le bouchon de matière à travers le masque et dans le sous-ensemble de cellules.

2. Procédé selon la revendication 1, dans lequel le bord extérieur du masque (38) et le bord extérieur (48) de la matière de film (42) s'étendent à l'extérieur autour de la totalité du bord extérieur (16) de la première face d'extrémité (18).

3. Procédé selon la revendication 1, dans lequel l'étape de soudage comprend le soudage de la totalité de la périphérie extérieure du masque (40) sur la totalité de la périphérie extérieure (46) de la matière de film.

4. Procédé selon la revendication 1, dans lequel l'étape de fourniture du masque comprend la fourniture d'un masque qui comprend une matière polymère.

5. Procédé selon la revendication 1, dans lequel l'étape d'application d'une force au film comprend la mise en place d'un piston (50) qui applique la force à la matière de film.

6. Procédé selon la revendication 1, comprenant en outre le positionnement de la structure en nid d'abeille dans une position sensiblement verticale avant le soudage du masque et de la matière de film l'un à l'autre.

7. Procédé selon la revendication 1, dans lequel l'étape de disposition du bouchon de matière comprend la disposition du bouchon de matière avec une épaisseur sensiblement uniforme.

8. Procédé selon la revendication 1, comprenant en outre les étapes suivantes:
couvrir une seconde face d'extrémité (20) d'une structure en nid d'abeille avec un second masque qui comprend un corps présentant un bord extérieur et une pluralité d'ouvertures qui s'étendent à travers celui-ci, le bord extérieur du corps du second masque s'étendant sensiblement à l'extérieur d'au moins une partie du bord extérieur de la seconde face d'extrémité;
fournir une seconde matière de film présentant un bord extérieur qui s'étend sensiblement à l'extérieur d'au moins une partie du bord extérieur de la seconde face d'extrémité;
disposer un second bouchon de matière sur la seconde matière de film;
souder le second masque et la seconde matière de film l'un à l'autre autour d'au moins une partie d'une périphérie extérieure du second masque et d'au moins une partie d'une périphérie extérieure de la seconde matière de film; et
appliquer une seconde force à la seconde matière de film pour pousser le second bouchon de matière à travers le second masque et dans un second sous-ensemble de cellules.

9. Procédé selon la revendication 8, dans lequel les étapes d'application de la force au film et de la seconde force au second film sont accomplies sensiblement simultanément.

10. Procédé selon la revendication 1, dans lequel l'étape de disposition du bouchon de matière comprend la disposition d'un bouchon de matière comprenant une matière céramique.

11. Appareil de bouchage d'un sous-ensemble de cellules (26) d'une structure en nid d'abeille (10), **caractérisé par**:
un ensemble de serrage (51) qui présente une première partie de serrage (52) et une seconde partie de serrage (54) opposée à la première partie de serrage, dans lequel les parties de serrage coopèrent pour serrer un bord extérieur (38) d'un masque (28) qui est collé à une première face d'extrémité (18) de la structure en nid d'abeille (10) et un bord extérieur (48) d'un film (42) adjacent au bord extérieur du masque, dans lequel le masque et le film comprennent une matière de bouchage (44) qui est contenue dans une chambre formée entre eux; et
un piston (50) qui opère de concert avec le film et qui est adapté pour pousser la matière de bouchage à travers le masque et dans le sous-ensemble de cellules.
